# EUROPÄISCHE PATENTSCHRIFT

(11) **EP 0 344 566 B1**
(45) Veröffentlichungstag und Bekanntmachung des Hinweises auf die Patenterteilung: **03.03.1993**
(21) Anmeldenummer: 89109182.9
(22) Anmeldetag: 22.05.1989
(51) Int. Cl.: B01D 1/00, B01D 3/00, D06F 43/08

(54) **Destillationsvorrichtung**
Distillation apparatus
Dispositif de distillation

(30) Priorität: 03.06.1988 DE 3818844
(43) Veröffentlichungstag der Anmeldung: 06.12.1989
(73) Patentinhaber: Jost, Walter, D-73733 Esslingen (DE)
(72) Erfinder: Jost, Walter, D-73733 Esslingen (DE)
(74) Vertreter: Reimold, Otto, Dr. Dipl.-Phys.

(56) Entgegenhaltungen:
- CH-A- 98 079
- GB-A- 886 189
- GB-A- 1 158 696
- PATENT ABSTRACTS OF JAPAN, Band 11, Nr. 229 (C-436)[2676], 25. Juli 1987

## Beschreibung

Die Erfindung betrifft eine Destillationsvorrichtung, insbesondere zum Destillieren des verunreinigten Lösungsmittels einer Reinigungsanlage zum chemischen Reinigen von Gegenständen aus Stoff wie Kleidungsstücke, mit einer Heizeinrichtung, einem Destillationsmediumeinlaß, einem Dampfauslaß, einem Destillationsraum zwischen dem Destillationsmediumeinlaß und dem Dampfauslaß und einem im Bodenbereich des Destillationsraums von diesem abgehenden Abfluß für die abgesonderten Bestandteile.

Die Destillationsvorrichtung ist also vor allem für chemische flüssige Lösungsmittel gedacht, die in Reinigungsanlagen zur chemischen Reinigung benutzt werden. Bei einer solchen Reinigung löst sich der an den betreffenden Gegenständen befindliche Schmutz im Lösungsmittel, so daß dieses im Laufe der Zeit beispielsweise mit Öl, Fettsäure usw. verunreinigt wird. Diese Verunreinigungen können dann durch einen Destillationsprozeß wieder abgesondert werden.

Destillationsvorrichtungen werden auch zum Reinigen anderer Flüssigkeiten als chemische Lösungsmittel eingesetzt, so beispielsweise zum Herstellen destillierten Wassers.

Eine solche, ansonsten die eingangs genannten Merkmale aufweisende Destillationsvorrichtung ist aus der DE-A-37 14 906 bekannt.

Bei der Destillationsvorrichtung gemäß der DE-A- 37 14 906 sind mehrere vertikale Rohrstücke vorhanden, die im Bodenbereich des Destillationsraums angeordnet sind und jeweils eine Heizelektrode enthalten. Das Destillationsmedium wird den Rohrstücken über einen bodenseitigen Destillationsmediumeinlaß zugeleitet, so daß das Destillationsmedium die Rohrstücke unter Aufheizen durch die Heizelektroden durchströmt. Der oben aus den Rohrstücken austretende Dampf gelangt dann nach mehrmaliger Umlenkung zum Dampfauslaß. Die schwerer flüchtigen Bestandteile bleiben in den Rohrstücken und können aus diesen über einen bodenseitigen Abfluß abgeführt werden.

Diese Destillationsvorrichtung ist in verschiedener Hinsicht nachteilig.

Die Heizelektroden tauchen unmittelbar in das Destillationsmedium, das sich somit um die jeweilige Elektrode herum wesentlich stärker als im dieser entfernteren Bereich erhitzt. Um eine überall über dem Vedampfungspunkt liegende Temperatur zu erhalten, müssen die Heizelektroden deshalb mit einer an sich unnötig hohen Heizleistung betrieben werden, was nicht nur erhöhte Betriebskosten verursacht, sondern zu örtlichen Überhitzungen des Destillationsmediums führt, das sich dabei zersetzen kann, würde das Destillationsmedium beispielsweise von einem Lösungsmittel gebildet werden.

Außerdem ergibt sich durch die Überhitzung eine Schaumbildung, so daß oben an den Rohrstücken nicht nur Dampf, sondern auch Schaum austritt. Dies ist sicherlich auch der Grund dafür, daß der anschließende Strömungsweg mehrere Umlenkungen und weitere Abflußstellen enthält. Dabei wird das Hochsteigen und Austreten des Schaumes dadurch begünstigt, daß das Destillationsmedium mittels einer Pumpe zugeleitet wird, die das Destillationsmedium nach oben drückt. Wegen des in den Rohrstücken von unten nach oben verlaufenden Strömungsweges kann auf diese Druckanwendung nicht verzichtet werden.

Ferner sind der apparative Aufwand und der Platzbedarf verhältnismäßig groß, da man wegen der lokalen, unmittelbaren Beheizung des Destillationsmediums eine Mehrzahl von Rohrstücken benötigt, die jeweils mit einer Heizelektrode und den verschiedenen Anschlüssen versehen sein müssen. Dabei kommt auch der mit der anschließenden mehrmaligen Umlenkung verbundene Aufwand und Platzbedarf hinzu.

Ein weiterer wesentlicher Nachteil besteht darin, daß während der Destillationsphase der Abfluß aus den Rohrstücken abgesperrt sein muß. Wäre dies nicht so, würde das Destillationsmedium nach dem Eintreten in die Rohrstücke sofort unten wieder austreten, die Destillation würde also nicht stattfinden. Somit ergibt sich ein intermittierender Betrieb, so daß zwangsläufig Totzeiten auftreten, in denen die abgesonderten Bestandteile abgelassen werden. In Zusammenhang mit dem intermittierenden Betrieb steht ferner, daß die abgesonderten Bestandteile unten in den Rohrstücken sich ansammeln und festbacken können.

Ausgehend hiervon liegt der Erfindung die Aufgabe zugrunde, eine Destillationsvorrichtung der eingangs genannten Art zu schaffen, die unter Vermeidung von Überhitzungen und einer hochsteigenden Schaumbildung mit möglichst geringer Heizleistung gewünschtenfalls auch kontinuierlich betrieben werden kann, wobei der apparative Aufwand und der Platzbedarf möglichst klein sein sollen.

Diese Aufgabe wird erfindungsgemäß dadurch gelöst, daß in einem mit einem durch die Heizeinrichtung aufheizbaren Heizmedium füllbaren Heizgefäß ein von oben nach unten verlaufendes, oben an den Destillationsmediumeinlaß anschließendes Fallrohr und ein von unten nach oben zum Dampfauslaß hin verlaufendes Steigrohr angeordnet sind, die beim Betrieb vom Heizmedium umgeben sind, unten miteinander verbunden sind und den Destillationsraum bilden, und daß der Abfluß unterhalb der Verbindungsstelle des Fallrohres mit dem Steigrohr angeordnet ist und einen Siphon enthält.

Bei der erfindungsgemäßen Vorrichtung wird das Destillationsmedium somit nicht von innen her, sondern durch das das Fallrohr und das Steigrohr umgebende Heizmedium erhitzt, so daß man eine gleichmäßige Wärmeverteilung ohne für die Flüssigbestandteile schädliche Temperaturspitzen erhält. Die erforderliche Heizleistung ist entsprechend niedrig, und die gewünschte Verdampfungstemperatur kann praktisch exakt eingestellt werden. Ferner steht das Destillationsmedium nicht unter Druck, da es nur aufgrund seiner Schwerkraft im Fallrohr nach unten strömt. Dabei findet der Destillationsprozeß bereits beim Nachuntenströmen im Fallrohr statt, so daß beim Erreichen der Verbindungsstelle, wo das Fallrohr in das Steigrohr übergeht, die Verunreinigungen im wesentlichen ganz ausgesondert sind. Der Dampf der reinen Flüssigkeit steigt dann im Steigrohr hoch, während die abgesonderten Bestandteile von selbst zum unterhalb der Verbindungsstelle befindlichen Abfluß gelangen. Somit wird auch eine Schaumbildung vermieden und auch ein kontinuierlicher Betrieb ermöglicht. Hierzu ist der abflußseitige Siphon wichtig, der die abgesonderten Flüssigbestandteile durchläßt, gleichzeitig jedoch eine Dampfsperre bildet. Somit kann die Vorrichtung mit dauernd abfließenden Flüssigbestandteilen betrieben werden, so daß sich im Destillationsraum keine Ablagerungen und keine festgebackene Schicht ergeben können.

Bei der erfindungsgemäßen Vorrichtung sind das zu destillierende Medium, der destillierte Dampf und die abgesonderten Bestandteile sozusagen dauernd in Bewegung, was die geschilderten Vorzüge zur Folge hat.

Mit Hilfe des abflußseitigen Siphons wird der weitere Vorteil erreicht, daß man den Sammelbehälter, in den die abgesonderten Bestandteile fließen, zur Vermeidung einer Geruchsbelästigung nach außen hin abgeschlossen ausbilden kann. Die beim Einfließen der Flüssigbestandteile in den Sammelbehälter verdrängte Luft gelangt über den Siphon zum Destillationsraum und wird von dort zusammen mit dem Dampf abgeführt.

Da sich auch das Steigrohr innerhalb des Heizmediums befindet und daher ebenfalls gleichmäßig erwärmt wird, kann sich der Dampf nicht zu früh abkühlen. Im hochsteigenden Dampf evtl. noch vorhandene Flüssigkeitspartikel fallen nach unten.

Da die Destillation nicht bei stehendem Destillationsmedium stattfindet, ist des weiteren der Platzbedarf klein. Außerdem ist der apparative Aufwand gering, da sich die erfindungsgemäße Vorrichtung aus verhältnismäßig wenigen Bauteilen zusammensetzt.

Aus "Patent Abstracts of Japan", Vol. 11 Nr. 229 (C-436) [2676] , 25.Juli 1987, ist es zwar bekannt, bei einer Destillationsvorrichtung ein Heizgefäß mit eingefülltem Heizmedium in Gestalt von Öl vorzusehen, wobei das Heizmedium mittels einer Heizeinrichtung aufheizbar ist. Ansonsten liegt hier jedoch eine bereits gattungsmäßig andere Vorrichtung vor, bei der dem Heizgefäß ein abnehmbarer Deckel zugeordnet ist, so daß ein innerhalb des Heizgefässes angeordneter, in das Heizmedium eintauchender Innenbehälter zugänglich ist, in den die jeweils zu destillierende Menge des Lösungsmittels eingefüllt wird.

Somit fehlt bei dieser bekannten Vorrichtung im Vergleich mit der erfindungsgemäßen Vorrichtung ein Destillationsmediumeinlaß, ein an diesen anschließendes Fallrohr, ein nach oben zum Dampfauslaß hin verlaufendes, unten mit dem Fallrohr verbundenes Steigrohr sowie ein unterer Abfluß mit einem Siphon. Daher weist diese bekannte Vorrichtung auch nicht die oben beschriebenen, auf diese Merkmale zurückzuführenden Vorteile auf. So ist bei der bekannten Vorrichtung beispielsweise kein kontinuierlicher Betrieb möglich, da jeweils nur eine Füllung des Innenbehälters destilliert werden kann. Ferner muß zu jedem neuen Befüllen des Innenbehälters der Deckel entfernt werden, was nicht nur umständlich ist sondern auch ein Entweichen von noch enthaltenem Lösungsmitteldampf zur Folge hat. Des weiteren muß der Innenbehälter verhältnismäßig häufig gereinigt werden, da die beim Destillationsvorgang nicht verdampfenden Bestandteile nicht von selbst abfließen sondern im Innenbehälter bleiben. Außerdem muß, da mit stehendem Lösungsmittel gearbeitet wird, der Innenbehälter einen vergleichsweise großen Querschnitt aufweisen, was nicht nur die Abmessungen der Vorrichtung vergrößert sondern vor allem einen Temperaturgradienten in radialer Richtung des Innenbehälters mit sich bringt.

Bei einer zweckmäßigen Ausgestaltung der erfindungsgemäßen Destillationsvorrichtung weist das Fallrohr einen wendelförmigen Verlauf auf, so daß auf geringstem Raum eine große Fallrohrlänge untergebracht werden kann. Auf diese Weise ist noch mehr gewährleistet, daß die Flüssigkeit bis zum Erreichen der Verbindungsstelle mit dem Steigrohr verdampft ist. Eine besonders kompakte Anordnung ergibt sich dabei dann, wenn sich das Fallrohr zumindest teilweise um das Steigrohr herumwindet.

Weist das Steigrohr einen größeren Durchmesser als das Fallrohr auf, ergibt sich eine besonders problemlose Dampfabfuhr.

Vorzugsweise enthält der Abfluß ein verschließbares Ablaßventil, so daß der Abfluß bedarfsweise auch geschlossen werden kann.

Zweckmäßigerweise mündet das Fallrohr seitlich oberhalb des unteren Rohrabschlusses des Steigrohres in das Steigrohr.

Eine weitere zweckmäßige Maßnahme besteht darin, daß das Steigrohr nach oben hin über das Heizgefäß hinaus eine Verlängerung aufweist. Auf diese Weise können unter ungünstigen Bedingungen im Dampf noch vorhandene Restverunreinigungen nicht weiter folgen und fallen nach unten zurück.

Besonders günstig hinsichtlich der Betriebskosten ist die Verwendung von Öl oder anderen wärmespeichernden Medien als Heizmedium. Hier ist ein intermittierender, insbesondere thermostatgesteuerter Heizprozeß vorteilhaft durchführbar.

Ist die Heizeinrichtung in das Heizmedium eingetaucht, ergibt sich eine besonders gute Wärmeübertragung.

Des weiteren ist es vorteilhaft, daß auf das Steigrohr außerhalb des Heizgefäßes eine seitliche Umlenkung folgt. Auch dies kann dazu dienen, im Dampf eventuell noch vorhandene Flüssigkeitspartikel die der Umlenkung nicht folgen können, sozusagen abzuschütteln.

Des weiteren kann dem Fallrohr ein Siphon vorgeordnet sein, wodurch in einfacher Weise eine Rückströmung des entstehenden Dampfes verhindert wird.

Die Erfindung wird nachfolgend anhand der beiliegenden Zeichnung näher erläutert. In dieser zeigen:
- Fig. 1: eine erste Bauform der erfindungsgemäßen Destillationsvorrichtung, wie sie bei einer Reinigungsanlage zum chemischen Reinigen von Gegenständen aus Stoff bevorzugt verwendbar ist, im Längsschnitt und stark schematisiert, sowie
- Fig. 2: eine weitere Ausführungsform der Destillationsvorrichtung, ebenfalls bevorzugt für den Einsatz in Reinigungsanlagen, mit optimiertem Fallrohrverlauf und ebenfalls im Längsschnitt in schematischer Darstellung.

Beide in der Zeichnung abgebildeten bevorzugte Ausführungsformen der Destillationsvorrichtung lassen sich insbesondere in Reinigungsanlagen zur chemischen Reinigung von Gegenständen aus Stoff verwenden. Da sich der Einsatz auch auf andere Gebiete erstrecken kann, wurde auf die Abbildung der näheren Ausgestaltung einer Reinigungsanlage verzichtet. Trotzdem soll sich die folgende Beschreibung an einer derartigen Reinigungsanlage orientieren.

Derartige chemische Reinigungsanlagen weisen regelmäßig eine drehbare Reinigungstrommel auf, die die zu reinigenden Gegenstände enthält und in die ein schmutzlösendes Lösungsmittel eingebracht wird. Dieses Lösungsmittel kann im Anschluß an das Verlassen durch eine Schmutzfiltereinrichtung geleitet werden, die verunreinigende Feststoffe ausfiltriert. Allerdings reichern sich im Lösungsmittel im Laufe der Zeit auch flüssige Verunreinigungen, z.B. Öle, Fettsäuren od.dgl., an, die die Reinigungsfähigkeit des Lösungsmittels herabsetzen. Um diese Verunreinigungen zu entfernen, wird das entsprechende Flüssigkeitsgemisch daher von Zeit zu Zeit oder auch kontinuierlich durch die erfindungsgemäße Destillationsvorrichtung hindurch geleitet.

In den beiden Figuren ist jeweils durch die Pfeile 1 angedeutet, wie die zu destillierende Flüssigkeit, nachfolgend als Destillationsmedium bezeichnet, in die Destillationsvorrichtung 2 bzw. 2′ einströmt. Ein entsprechender Mediumeinlaß ist bei 3 angedeutet. Beim Durchlaufen der Destillationsvorrichtung 2 bzw. 2′ findet sodann der Destillationsprozeß statt, im Rahmen dessen das Lösungsmittel in den dampfförmigen Zustand übergeführt wird, in dem es die Vorrichtung gemäß Pfeilen 4 anschließend wieder verläßt, um einem nicht näher dargestellten Kondensator zugeführt zu werden, in dem eine Rückverflüssigung des nunmehr wieder sauberen Lösungsmittels stattfindet. Einer erneuten Verwendung in einem Reinigungsprozeß steht damit nichts mehr im Wege.

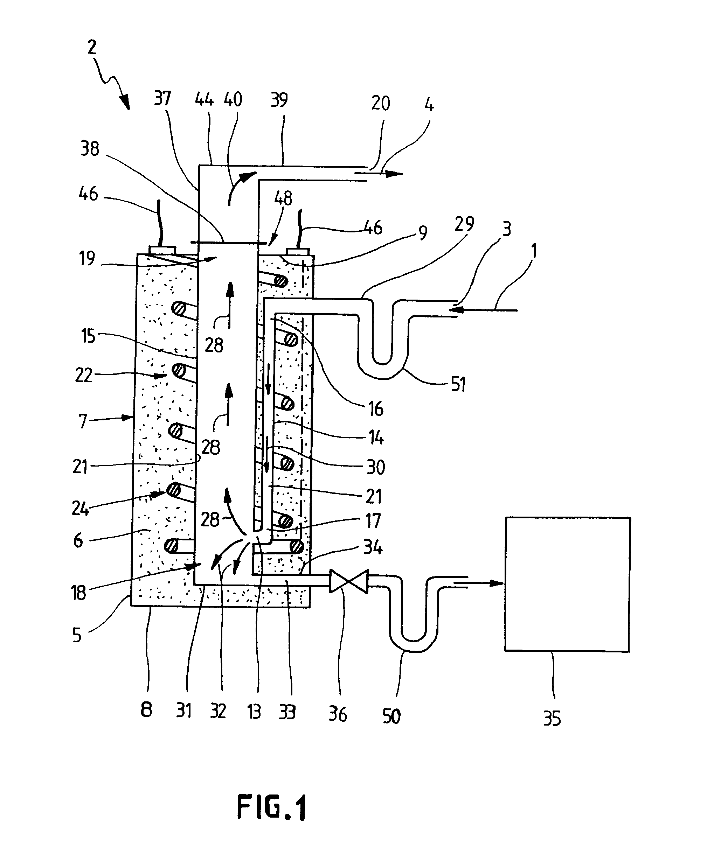

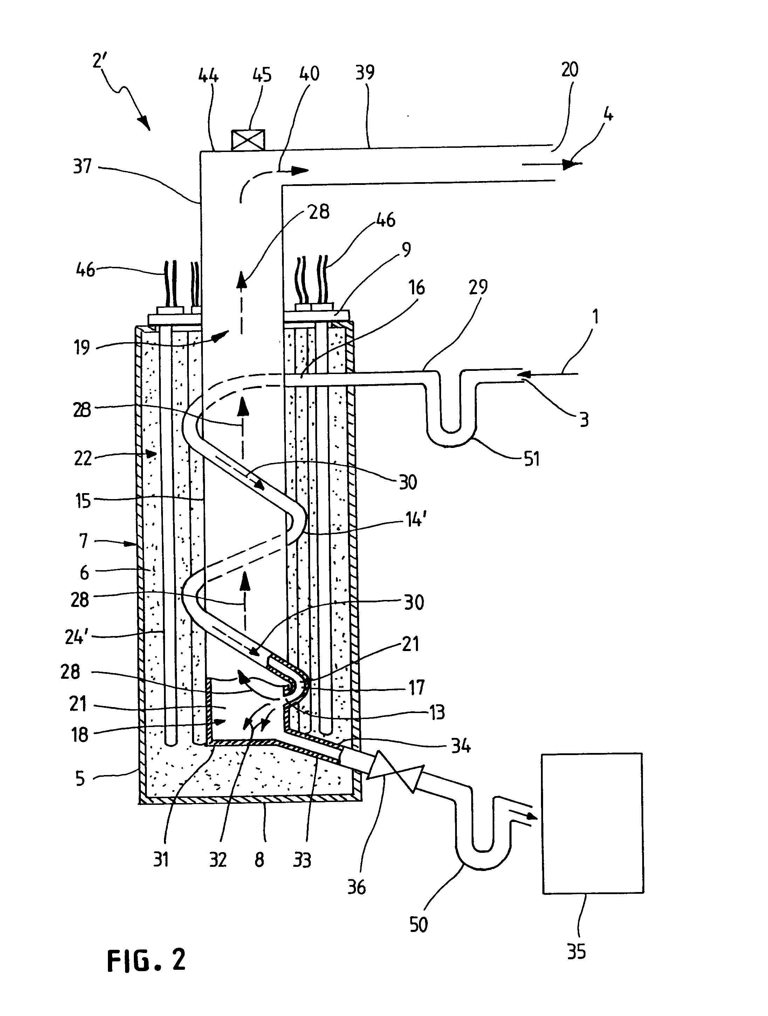

Die Destillationsvorrichtungen gemäß Figuren 1 und 2 verfügen über ein allseits geschlossenes Heizgefäß 5, das im Inneren einen Heizraum 6 enthält. Als besonders zweckmäßig hat sich ein Heizgefäß mit hohlzylindrischer Erstreckung bzw. Wand 7 erwiesen, das an beiden Axialseiten verschlossen ist. Das Heizgefäß 5 des Ausführungsbeispiels ist topfförmig ausgebildet und verfügt über einen einstückig angeformten Boden 8 an der Unterseite, während die Oberseite lösbar und abgedichtet mittels eines Deckels 9 verschlossen ist.

Im Inneren des beim Ausführungsbeispiel zylindrischen Heizraumes 6 befinden sich zwei miteinander kommunizierende, d.h. in Verbindung stehende Rohre, ein Fallrohr 14 bzw. 14′ sowie ein Steigrohr 15. In der abgebildeten Gebrauchslage der Vorrichtungen gemäß Fig. 1 und 2 weist das jeweilige Fallrohr 14 bzw. 14′ einen von oben nach unten gerichteten Verlauf auf, wobei sein oberer Endbereich 16 mit dem Mediumeinlaß 3 korrespondiert, während das untere Rohrende 17 an einer Verbindungsstelle 13 in den unteren Rohrbereich 18 des Steigrohres 15 einmündet. Das Steigrohr 15 hat einen von unten nach oben gerichteten Verlauf, wobei sein oberer Rohrbereich 19 mit einem Dampfauslaß 20 kommuniziert, durch den die Dämpfe gemäß Pfeilrichtung 4 abströmen.

Sowohl das Fallrohr 14, 14′ als auch das Steigrohr 15 befinden sich im Inneren des Heizraumes 6, und beide Rohre begrenzen im Inneren einen zusammenhängenden Destillationsraum 21.

Der Heizraum 6 ist des weiteren vorzugsweise vollständig mit einem zweckmäßigerweise flüssigen Heizmedium 22 gefüllt, das in den Figuren gepunktet angedeutet ist. Verwendung findet hier bevorzugt eine wärmespeichernde Flüssigkeit wie Öl. Dieses Heizmedium 22 umgibt die beiden Rohre 14 bzw. 14′ und 15. Das Heizmedium 22 ist durch eine Heizeinrichtung 24, 24′ mit mindestens einem Heizelement aufheizbar. Auf diese Weise erhält man eine gleichmäßige Wärmeübertragung von dem durch die Heizelemente erhitzten Heizmedium auf den Destillationsraum bzw. das darin befindliche Medium. Diese gleichmäßige Wärmeübertragung hat den Vorteil, daß wesentlich weniger Heizleistung erforderlich ist, um das Destillationsmedium auf die erforderliche Verdampfungstemperatur zu erwärmen. Darüber hinaus sind Temperaturspitzen im Destillationsmedium ausgeschlossen, es kann eine gleichmäßige, kontrollierte Erwärmung erfolgen, so daß eine infolge Temperaturüberhöhung erfolgende Zersetzung des eingeleiteten Lösungsmittels vollständig ausgeschlossen ist.

Der bevorzugte Verfahrensablauf in der erfindungsgemäßen Destillationsvorrichtung gestaltet sich also folgendermaßen:
Das mit flüssigen Bestandteilen verunreinigte Lösungsmittel wird gemäß Pfeil 1 dem Einlaß 3 zugeleitet und gelangt über ein mehr oder weniger langes Rohrstück 29 in den oberen Bereich des jeweiligen Fallrohres 14, 14′. Von hier aus strömt das Destillationsmedium gemäß den Pfeilen 30 im Fallrohr 14, 14′ entlang nach unten, wobei es schon hier der gleichmäßig einwirkenden Heizenergie des Heizmediums 22 ausgesetzt ist. Spätestens an der Verbindungsstelle 13, also an der Einmündung in den unteren Rohrbereich 18 des Steigrohres 15, hat das im Destillationsmedium enthaltene Lösungsmittel seine Verdampfungstemperatur erreicht. Es steigt daher im Inneren des Steigrohres 15 gemäß Pfeilen 28 in Dampfform nach oben in Richtung des oberen Rohrbereiches 19. Die schwereren, noch nicht verdampften flüssigen Verunreinigungen steigen dagegen nicht auf und bleiben unten, wobei sie bei den Ausführungsbeispielen, in denen der untere Rohrabschluß 31 des Steigrohres 15 tiefer als die Verbindungsstelle 13 liegt, gemäß Pfeilen 32 nach unten fallen und sich dort ablagern. Während nun das von Verunreinigungen befreite, dampfförmige Lösungsmittel gemäß Pfeil 4 z.B. einem Kondensator zuführbar ist, können die sich im unteren Steigrohrbereich 18 ansammelnden flüssigen Verunreinigungen über einen Abfluß 33 abfließen. Der Abfluß 33 wird bei den Ausführungsbeispielen von einem Rohrstück 34 gebildet, das einerseits im unteren Bereich des Steigrohres 15, bevorzugt tiefer liegend als die Verbindungsstelle 13, beginnt und andererseits unter Abdichtung durch das Heizgefäß 5 hindurch ins Freie führt, wo es mit einem zweckmäßigerweise geschlossenen Sammelbehälter 35 verbunden sein kann. Der Abfluß 33 kann gemäß den Ausführungsbeispielen ein Ablaßventil 36 enthalten, so daß in zeitlichen Abständen eine Entleerung erfolgen kann. Dies hat den Vorteil, daß beim Entleeren ein Sog entsteht, der auch evtl. entstandene Eindickungen mitreißt, so daß ein Selbstreinigungseffekt entsteht.

Bei beiden Ausführungsbeispielen weist das im Inneren des Heizraumes 6 angeordnete Steigrohr 15 lineare Erstreckung auf und verläuft in Gebrauchslage vertikal. Gleiches trifft auch für das beim Ausführungsbeispiel gemäß Fig. 1 verwendeten Fallrohr 14 zu, das lediglich im oberen und unteren Bereich seitlich abgeht, zum einen, um oben aus dem Heizgefäß herausgeführt zu werden, und zum anderen, um unten zur Verbindungsstelle 13 zu gelangen. Dazwischen verläuft das Fallrohr 14 parallel zum und unmittelbar neben dem Steigrohr 15, so daß sich quer zu den Strömungsrichtungen 28, 30 geringe Abmessungen ergeben.

Demgegenüber weist das Fallrohr 14′ beim Ausführungsbeispiel gemäß Fig. 2 einen wendelförmig gewundenen Verlauf auf, und es windet sich um das Steigrohr 15 als Kern herum, wobei die Längsachse des Wendelkörpers mit der Längsachse des Steigrohres im wesentlichen zusammenfällt. Es ergibt sich dadurch eine schraubenlinienförmige Gestalt. Der Vorteil hierbei ist, daß die Breitenabmessungen der Vorrichtung weiter reduziert werden können und daß es möglich ist, dem Fallrohr 14′ eine wesentlich größere Länge zwischen dem oberen Endbereich 16 und der Verbindungsstelle 13 zu geben, wodurch sich eine längere Beheizdauer während des Durchströmens ergibt.

Bei beiden Ausführungsformen ist der Durchmesser des Steigrohres 15 zweckmäßigerweise größer als derjenige des Fallrohres 14, 14′. Beide Rohre 14 bzw. 14′ und 15 können einstückig miteinander ausgebildet sein. Als Rohrmaterial kann temperaturfestes Glas oder Metall verwendet werden.

Wie die Figuren zeigen, kann der untere Rohrabschluß 31 des Steigrohres 15 unterhalb der Verbindungsstelle 13, an der das Fallrohr 14, 14′ seitlich in das Steigrohr 15 einmündet, angeordnet sein. Dadurch entsteht im unteren Steigrohrbereich 18 ein Sammelraum für abgeschiedene Verunreinigungen.

Das Steigrohr 15 ist vorzugsweise koaxial bezüglich des Heizgefäßes 5 angeordnet. Es verfügt ferner über eine oben im Bereich des Deckels 9 aus dem Heizgefäß 5 herausragende Steigrohrverlängerung 37, die demnach zwischen dem Dampfauslaß 20 und dem eigentlichen Steigrohr 15 angeordnet ist. Bevorzugt ist die Verlängerung 37 einstückig am Steigrohr 15 angeformt, wie dies gemäß Fig. 2 der Fall ist. Auch eine Ausführung als separates Bauteil (Fig. 1) ist möglich, wobei in diesem Falle die Verlängerung 37 über einen Flansch 38 mit dem Steigrohr 15 lösbar verbunden sein kann.

Die Verlängerung 37 und das zugeordnete Steigrohr 15 sind zweckmäßigerweise koaxial zueinander angeordnet, so daß das Steigrohr in vertikaler Richtung verlängert ist. Die Steigrohrverlängerung 37 bewirkt einen längeren Strömungsweg für die Dämpfe gemäß Pfeilen 28, so daß unter ungünstigen Bedingungen doch noch mit hochgerissene Verunreinigungen spätestens im Bereich der Verlängerung 37 nach unten zum unteren Rohrbereich 18 zurückfallen.

Bevorzugt wird der gemäß Pfeilen 28 aufsteigende Dampf außerhalb des Heizgefäßes 5 gegenüber der ursprünglichen Steigrichtung zur Seite hin umgelenkt. Bei den Ausführungsbeispielen ist hierzu an die Steigrohrverlängerung 37 im Abstand zum Heizgefäß 5 ein die Umlenkung bildendes Querrohr 39 angeformt, das einerseits mit dem Steigrohr 15 und andererseits mit dem Dampfauslaß 20 korrespondiert.

Der aufsteigende Dampf wird dadurch im Mündungsbereich des Querrohres 39 gemäß Pfeil 40 seitlich umgelenkt, flüssige Bestandteile können dieser Bewegung nicht folgen, prallen gegen den axialen oberen Abschluß 44 der Verlängerung 37, um anschließend nach unten zu fallen. Im Bereich des oberen Abschlusses 44 kann ein Sicherheitsventil 45 angeordnet sein.

Bevorzugt ist das mindestens eine Heizelement der Heizeinrichtung 24, 24′ im Inneren des Heizraumes 6 angeordnet und unmittelbar in das Heizmedium 22 eingetaucht. Dies gewährleistet bestmögliche Wärmeübertragung und schnellstmögliche Aufheizung.

Außerdem ist es vorteilhaft, wenn das bzw. die Heizelemente den Destillationsraum 21 bzw. die diesen begrenzenden Rohre 14, 14′ 15 seitlich umgeben, wobei beide Rohre vorzugsweise über die gesamte Länge von der Heizelementenanordnung umgeben sind. Beim Ausführungsbeispiel gemäß Fig. 1 ist ein einziges Heizelement 24 gewählt, das wendelförmig in Gestalt einer Heizspirale ausgebildet ist und beide Rohre 14, 15 mit seinen Windungen umgibt. Bei 46 sind entsprechende Elektroanschlüsse angedeutet.

Besonders vorteilhaft ist jedoch auch die Verwendung einer Mehrzahl von insbesondere stabförmigen Heizelementen 24′, wie dies beim Ausführungsbeispiel gemäß Fig. 2 der Fall ist. Sie erstrecken sich im ringförmigen Zwischenraum zwischen der von den Rohren 14′, 15 gebildeten Anordnung und der Wand 7 des Heizgefäßes 5, wobei sie in Umfangsrichtung bezüglich der Längsachse des Steigrohres 15 bevorzugt gleichmäßig verteilt angeordnet sind und sich in Längsrichtung des Steigrohres 15 erstrecken. Auch hier sind Elektroanschlüsse 46 für den Heizstrom vorgesehen, die wiederum an dem Deckel 9 angeordnet sein können, mit dem das Heizgefäß 5 oben unter Abdichtung lösbar verschlossen ist. Der Deckel 9 dient gleichzeitig als Träger für die Heizelemente 24, 24′, die somit durch Abnahme des Deckels 9 entfernt werden können. Außerdem verfügt der Deckel 9 beim Ausführungsbeispiel gemäß Fig. 1 über eine mittige Öffnung 48 zum Durchstecken des Steigrohres 15, während er beim Ausführungsbeispiel gemäß Fig. 2 an das Steigrohr 15 angeformt ist. Letzteres ermöglicht die Montage der gesamten Anordnung praktisch in einem einzigen Arbeitsgang.

Zweckmäßig ist es, wenn der Eintrittsbereich und der Austrittsbereich der beiden Rohre 14 bzw. 14′, 15 bezüglich des Heizgefäßes gesehen in etwa auf der gleichen Höhe angeordnet sind.

Bei beiden Ausführungsformen sind die Rohre und die Heizelemente bevorzugt hängend in den Heizraum 6 eingetaucht, so daß eine Berührung mit Wand- bzw. Bodenbereichen im wesentlichen ausgeschlossen ist.

Das jeweilige Fallrohr 14, 14′ kann berührungslos neben dem Steigrohr 15 angeordnet sein bzw. dieses umgeben. Dadurch besteht zwischen dem jeweiligen Fallrohr 14, 14′ und dem zugeordneten Steigrohr 15 ein Zwischenraum, der vom Heizmedium 22 ausgefüllt ist, was von besonderem Vorteil für eine gleichmäßige Wärmeübertragung ist. Beide Rohre können vollständig vom Heizmedium umspült werden, ohne daß einzelne Flächenabschnitte abgedeckt sind.

Hinsichtlich der Steigrohrverlängerung 37 sei noch angefügt, daß diese zweckmäßigerweise temperaturisoliert ausgebildet ist. Es versteht sich, daß auch das Heizgefäß 5 isoliert sein kann.

Bei beiden Ausführungsformen ist am Abfluß 33 ein Siphon 50 angeordnet. Dieser Siphon 50 kann das Ablaßventil 36 ersetzen. Durch den Siphon 50 können die nicht dampfförmigen Ablagerungen dauernd abfließen, ohne daß dampfförmiges Lösungsmittel mitströmt.

Ferner kann auch dem Einlaß 3 ein Siphon 51 zugeordnet sein, der eine Rückströmung des Dampfes verhindert.

Sowohl der Siphon 50 als auch der Siphon 51 stellt also eine Sperre dar.

Mit Bezug auf die Heizeinrichtung ist ergänzend nachzutragen, daß auch andere als die beschriebenen Heizeinrichtungsformen unter Umständen verwendbar sind. Von Vorteil ist zum Beispiel eine Mikrowellenheizung. Außerdem ist es möglich, das Fallrohr und/oder das Steigrohr selbst als Heizelement zu verwenden, z.B. indem man zwischen die jeweiligen Enden eine elektrische Spannung anlegt.

Abschließend sei darauf hingewiesen, daß unter dem Begriff "Rohr" im Sinne der Erfindung nicht nur Rohre im allgemeinen Sinne verstanden werden, sondern jegliche einen Strömungskanal umschließenden Gefäße, Behältnisse od.dgl. Es ist jedoch vorteilhaft, die beim Ausführungsbeispiel kreiszylindrischen Rohrkörper zu verwenden.

## Patentansprüche

1. Destillationsvorrichtung, insbesondere zum Destillieren des verunreinigten Lösungsmittels einer Reinigungsanlage zum chemischen Reinigen von Gegenständen aus Stoff wie Kleidungsstücke, mit einer Heizeinrichtung (24,24'), einem Destillationsmediumeinlaß (3), einem Dampfauslaß (20), einem Destillationsraum zwischen dem Destillationsmediumeinlaß (3) und dem Dampfauslaß (20) und einem im Bodenbereich des Destillationsraums von diesem abgehenden Abfluß (33) für die abgesonderten Bestandteile, dadurch gekennzeichnet, daß in einem mit einem durch die Heizeinrichtung (24,24′) aufheizbaren Heizmedium (22) füllbaren Heizgefäß (5) ein von oben nach unten verlaufendes, oben an den Destillationsmediumeinlaß (3) anschließendes Fallrohr (14,14′) und ein von unten nach oben zum Dampfauslaß (20) hin verlaufendes Steigrohr (15) angeordnet sind, die beim Betrieb vom Heizmedium (22) umgeben sind, unten miteinander verbunden sind und den Destillationsraum (21) bilden, und daß der Abfluß (33) unterhalb der Verbindungsstelle (13) des Fallrohres (14,14′) mit dem Steigrohr (15) angeordnet ist und einen Siphon (50) enthält.

2. Destillationsvorrichtung nach Anspruch 1, dadurch gekennzeichnet, daß das Fallrohr (14) einen wendelförmigen Verlauf aufweist.

3. Destillationsvorrichtung nach Anspruch 2, dadurch gekennzeichnet, daß sich das Fallrohr (14) zumindest teilweise um das Steigrohr (15) herumwindet.

4. Destillationsvorrichtung nach einem der Ansprüche 1 bis 3, dadurch gekennzeichnet, daß das Steigrohr (15) einen größeren Durchmesser als das Fallrohr (14,14′) aufweist.

5. Destillationsvorrichtung nach einem der Ansprüche 1 bis 4, dadurch gekennzeichnet, daß der Abfluß (33) ein verschließbares Ablaßventil (36) enthält.

6. Destillationsvorrichtung nach einem der Ansprüche 1 bis 5, dadurch gekennzeichnet, daß das Fallrohr (14, 14′) seitlich oberhalb des unteren Rohrabschlusses (31) des Steigrohres (15) in das Steigrohr (15) einmündet.

7. Destillationsvorrichtung nach einem der Ansprüche 1 bis 6, dadurch gekennzeichnet, daß das Steigrohr (15) nach oben hin über das Heizgefäß (5) hinaus eine Verlängerung (37) aufweist.

8. Destillationsvorrichtung nach einem der Ansprüche 1 bis 7, dadurch gekennzeichnet, daß als Heizmedium Öl oder andere wärmespeichernde Medien verwendet werden.

9. Destillationsvorrichtung nach einem der Ansprüche 1 bis 8, dadurch gekennzeichnet, daß die Heizeinrichtung (24,24′) in das Heizmedium eingetaucht ist.

10. Destillationsvorrichtung nach einem der Ansprüche 1 bis 9, dadurch gekennzeichnet, daß auf das Steigrohr (15) außerhalb des Heizgefäßes (5) eine seitliche Umlenkung (39) folgt.

11. Destillationsvorrichtung nach einem der Ansprüche 1 bis 10, dadurch gekennzeichnet, daß dem Fallrohr (14, 14′) ein Siphon (51) vorgeordnet ist.

## Claims

1. Distillation device, in particular for distilling the contaminated solvent of a dry-cleaning plant for chemically cleaning fabric items such as garments, having heating means (24, 24'), a distillation medium inlet (3), a steam outlet (20), a distillation chamber located between the distillation medium inlet (3) and the steam outlet (20) and a drain (33) for the separated components, which is arranged in the bottom area of the distillation chamber and extends therefrom, characterized in that in a heating vessel (5) which can be filled with a heating medium (22) that can be heated up by means of the heating means (24, 24'), a fall pipe (14, 14') extending from the top to the bottom and being connected at the top to the distillation medium inlet (3), and an ascending pipe (15) extending from the bottom to the top towards the steam outlet (20) are arranged, which in use are surrounded by the heating medium (22), are connected with each other at the bottom and form the distillation chamber (21), and in that the drain (33) is located below the junction of the fall pipe (14, 14') and the ascending pipe (15) and includes a siphon (50).

2. Distillation device according to Claim 1,
characterized in that the fall pipe (14) runs in a coil-like fashion.

3. Distillation device according to Claim 2,
characterized in that the fall pipe (14) at least partially runs around the ascending pipe (15).

4. Distillation device according to any one of the Claims 1 to 3, characterized in that the ascending pipe (15) has a diameter greater than the fall pipe (14, 14').

5. Distillation device according to any one of the Claims 1 to 4, characterized in that the drain (33) has a closable drain valve (36).

6. Distillation device according to any one of the Claims 1 to 5, characterized in that the fall pipe (14, 14') joins the ascending pipe (15) laterally above the lower pipe termination (31) of the ascending pipe (15).

7. Distillation device according to any one of the Claims 1 to 6, characterized in that the ascending pipe (15) has an extension (37) extending upwards beyond the heating vessel (5).

8. Distillation device according to any one of the Claims 1 to 7, characterized in that oil or other heat storing media are used as a heating medium.

9. Distillation device according to any one of the Claims 1 to 8, characterized in that the heating device (24, 24') is submerged into the heating medium.

10. Distillation device according to any one of the Claims 1 to 9, characterized in that the ascending pipe (15) is followed outside of the heating vessel (5) by a sideward turn (39).

11. Distillation device according to any one of the Claims 1 to 10, characterized in that the fall pipe (14, 14') is preceded by a siphon (51).

## Revendications

1. Dispositif de distillation, notamment pour distiller le solvant usé d'une installation de nettoyage pour le nettoyage chimique d'articles en tissu tels que des pièces de vêtement, comportant un dispositif de chauffage (24, 24'), une entrée de fluide de distillation (3), une sortie de vapeur (20), une chambre de distillation entre l'entrée du fluide de distillation (3) et la sortie de vapeur (20) ainsi qu'une évacuation (33) dans la zone du fond de la chambre de distillation, partant de celle-ci, pour les constituants séparés, caractérisé en ce qu'il est prévu, dans un réservoir de chauffage (5), rempli d'un fluide de chauffage (22), chauffé par le dispositif de chauffage (24, 24'), un tube de descente (14, 14') s'étendant de haut en bas, raccordé, à sa partie supérieure, à l'entrée de fluide de distillation (3) et un tube montant (15), s'étendant de bas en haut, vers la sortie de vapeur (20), qui sont entourés pendant le fonctionnement par le fluide de chauffage (22), sont reliés entre eux à leur partie inférieure et forment la chambre de distillation (21) et en ce que l'évacuation (33) est située au-dessous du point de liaison (13) du tube de descente (14, 14') et du tube montant (15) et contient un siphon (50).

2. Dispositif de distillation selon la revendication 1, caractérisé en ce que le tube de descente (14) a un parcours en spirale.

3. Dispositif de distillation selon la revendication 2, caractérisé en ce que le tube de descente (14) s'enroule au moins en partie autour du tube montant (15).

4. Dispositif de distillation selon l'une des revendications 1 à 3, caractérisé en ce que le tube montant (15) présente un plus grand diamètre que le tube de descente (14, 14').

5. Dispositif de distillation selon l'une des revendications 1 à 4, caractérisé en ce que l'évacuation (33) contient une vanne de purge (36) pouvant être fermée.

6. Dispositif de distillation selon l'une des revendications 1 à 5, caractérisé en ce que le tube de descente (14, 14') débouche latéralement, au-dessus de la fermeture inférieure (31) du tube montant (15), dans le tube montant (15).

7. Dispositif de distillation selon l'une des revendications 1 à 6, caractérisé en ce que le tube montant (15) présente vers le haut, au-dessus du réservoir de chauffage (5), un prolongement (37).

8. Dispositif de distillation selon l'une des revendications 1 à 7, caractérisé en ce qu'on utilise comme fluide de chauffage de l'huile ou d'autres moyens d'accumulation de chaleur.

9. Dispositif de distillation selon l'une des revendications 1 à 8, caractérisé en ce que le dispositif de chauffage (24, 24') est immergé dans le fluide de chauffage.

10. Dispositif de distillation selon l'une des revendications 1 à 9, caractérisé en ce qu'une déviation latérale (39) fait suite au tube montant (15), à l'extérieur du réservoir de chauffage (5).

11. Dispositif de distillation selon l'une des revendications 1 à 10, caractérisé en ce qu'un siphon (51) est placé en amont du tube de descente (14, 14').
